# EUROPEAN PATENT SPECIFICATION

(11) **EP 1 462 891 B1**
(45) Date of publication and mention of the grant of the patent: **16.08.2006**
(21) Application number: 04006528.6
(22) Date of filing: 18.03.2004
(51) Int. Cl.: G05B 19/042

(54) **Data communications system and data communications method**
Datenkommunikationssystem und Datenkommunikationsverfahren
Système de communication de donées et procédé de communication de données

(30) Priority: 28.03.2003 JP 2003091705
(43) Date of publication of application: 29.09.2004
(73) Proprietor: KABUSHIKI KAISHA TOYOTA JIDOSHOKKI, Kariya-shi, Aichi-ken 448-8671 (JP)
(72) Inventor: Iwashita, Tsunenori, Kariya-shi Aichi-ken 448-8671 (JP)
(74) Representative: HOFFMANN EITLE

(56) References cited:
- EP-A- 0 302 364
- EP-A- 0 461 078
- EP-A- 1 223 715
- US-A- 5 246 039
- US-A1- 2002 098 841
- ZHANG W ET AL: "On Improving the Performance of Bluetooth Networks THROUGH DYNAMIC ROLE MANAGEMENT" INTERNET ARTICLE, May 2001 (2001-05), XP002198269

## Description

### Background of the Invention

### Field of the Invention

The present invention relates to a data communications system and a data communications method for use among a plurality of industrial devices connected to a network.

### Description of the Related Art

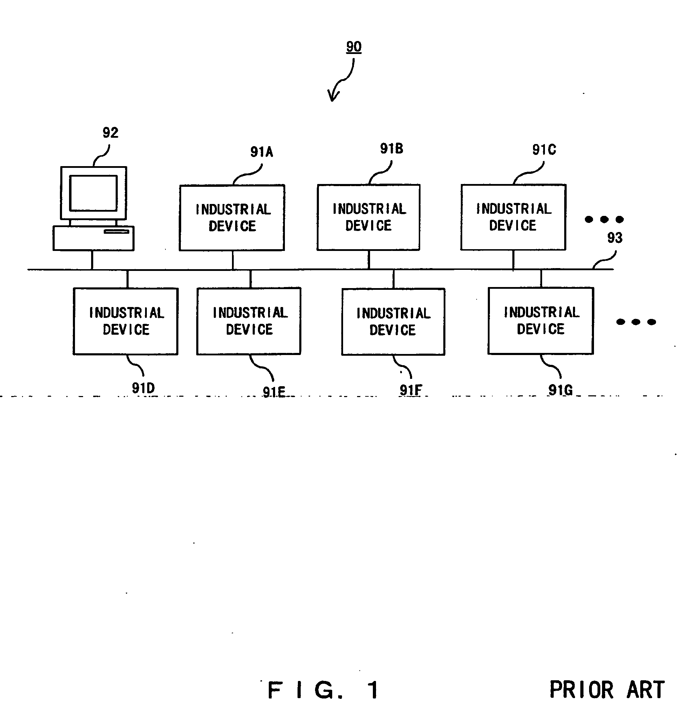

FIG. 1 shows the configuration of an existing data communications system.

As shown in FIG. 1, in a data communications system 90, a plurality of industrial devices 91 (91A, 91B, 91C, ...) and a server 92 are connected to a network 93 such as a LAN (local area network), etc.

The industrial device 91 refers to, for example, production equipment, machining equipment, measurement equipment, inspection equipment, etc., and includes an operation panel such as a flat panel, a touch panel, etc. An operator performs a predetermined operation on an operation panel, and controls the operation of a target unit having the functions of a producing process, a machining process, a measuring process, an inspecting process, etc. At this time, the industrial device 91 changes various set values, and displays data, etc. indicating the operation status of the industrial device 91 on the operation panel. The set value for use in controlling the operation of the target unit and the data, etc. indicating the operation status of the target unit are centrally managed by the server 92 through the network 93.

Thus, although the industrial device 91 stops for any reason by the server 92 managing the set value for controlling the operation of the target unit and the data indicating the operation status of the target unit, the set values and the operation status data of the industrial device 91 can be retrieved immediately after the recovery of the industrial device 91.

Recently, an industrial control system disclosed by Japanese Patent Application Laid-open No.2002-204281, a system using a central computer disclosed by Japanese Patent Application Laid-open No.1993-239742, or the above-mentioned data communications system 90 are used in various production factories, etc. for easier maintenance, etc.

However, since a system for centrally managing data of the industrial device 91 by the server 92 requires the server 92 to be constantly operable, there occurs the problem that data cannot be communicated between the industrial device 91 and the server 92 when an abnormal condition arises in the server 92.

Additionally, there is the problem that the industrial device 91 and the server 92 require respective software exclusive for data communications, and the software is often incompatible with each other.

Therefore, to solve the above-mentioned problems, a server facility has recently been provided for each industrial device 91 to realize peer-to-peer communications.

For example, as disclosed in Japanese Patent Application Laid-open No.2003-5828, each industrial device 91 is provided with a server facility so that the data indicating the operation status of an industrial device 91 can be checked by another industrial device 91, and a set value of an industrial device 91 can be changed by another industrial device 91.

US 5,246,039 describes a textile machine control system with prioritized message transmission of machine functions, wherein elements of a textile machine are controlled and supervised by a computer system comprising one or more units serving the elements. Each unit is connected to a connection, forming part of a network, wherein message transmission takes place serially but dependent on priority. A supervising electronic system is used to control different functions of the textile machine.

EP 1 223 715 A1 describes a temporary master/slave switching in a piconet in a Bluetooth communication system enabling peer-to-peer communication between slave devices through master-to-slave switching in a piconet. A master device of the wireless communication system request a slave device to perform temporarily a function of a master device and sends information about other slave devices.

### Summary of the invention

However, in the above-mentioned data communications system 90 and the system disclosed in Japanese Patent Application Laid-open No. 2002-204281, Japanese Patent Application Laid-open No.1993-239742, and Japanese Patent Application Laid-open No.2003-5825, when an operator communicates data between two industrial devices 91 or between an industrial device 91 and a server 92, the operator has to communicate data using one device (the industrial device 91 or the server 92). When the device is remote from the location of the operator, the operator has to reach the device to perform the operation of communicating data.

Therefore, the present invention aims at providing a data communications system and a data communications method capable of improving the operability of the data communications between arbitrary industrial devices.

This object is achieve by a data communications system having the features of claim 1 as well as by a data communications method having the features of claim 6.

A data communications system communicates data through a network among first through third industrial devices based on predetermined data. The first industrial device includes a first transmission unit for transmitting to the second industrial device the first request data at an input request. The second industrial device includes: a reception unit for receiving the first request data; and a communications unit for communicating the predetermined data with the third industrial device through the network at the first request data.

The first request data requests the predetermined data to be downloaded from the third industrial device, and is used in determining between which devices connected to a network the predetermined data is to be communicated.

Thus, in the data communications system according to the present invention, for example, the first industrial device near the operator can operate data communications between the second and third industrial devices by communicating data between the second and third industrial devices according to the request data transmitted from the first industrial device although the second and third industrial devices are remote from the operator. Thus, the operability of the data communications between arbitrary industrial devices can be improved.

Additionally, the second industrial device in the data communications system can be a server for centrally managing the predetermined data of the first and third industrial devices, and the first transmission unit can transmit the first request data to the server, and the communications unit can communicate the predetermined data with the first or third industrial device through the network according to the first request data.

Thus, since the first industrial device can operate the data communications between the server and the third industrial device, the operator can operate the data communications between the server and the third industrial device without reaching the server or the third industrial device.

The data communications system can further include a first terminal device having a second transmission unit for transmitting input second request data to the second industrial device through the network, and the communications unit can communicate the predetermined data according to the second request data.

Thus, the operator can operate the data communications between the second and third industrial device or the data communications between the server and the third industrial device without reaching the server, the third industrial device, or the first industrial device.

The data communications system can also include a second terminal device having a third transmission unit for transmitting third request data at an input request to the second industrial device through a wireless LAN. The communications unit can also communicate the predetermined data with the first industrial device, the third industrial device, or the first terminal device through the network at the third request data.

Thus, the data communications between the second and third industrial devices or between the server and the third industrial device can be performed by operating the data communications between the server and the third industrial device by wireless, thereby facilitating the realization and the operation of the data communications system.

In the data communications system. the first through third industrial devices, the first terminal device, and the second terminal device can also include a read unit for reading the contents of a storage medium for storing the predetermined data, and the communications unit can communicate the predetermined data stored in the storage medium.

Thus, since the data communications between the second and third industrial devices, or the data communications between the server and the third industrial device can be performed using a storage medium, the data communications system can be easily realized and operated.

Furthermore, in the data communications system, the first through the third industrial devices can control the operation of a loom according to the predetermined data.

Thus, in a factory in which a large number of looms are operated, the data communications system for controlling the operation of each of the large number of looms can be easily realized and performed.

The scope of the present invention ranges up to the data communications method for performing data communications through a network among the first through third industrial devices operating based on predetermined data.

### Brief Description of the Drawings

FIG. 1 shows the configuration of an existing data communications system;
FIG. 2 shows the configuration of the data communications system according to an embodiment of the present invention;
FIG. 3 shows the sequence for explanation of the data communications method according to an embodiment of the present invention;
FIGs. 4A through 4F show examples of a practical screen output by the input/output unit;
FIG. 5 shows the sequence for explanation of the data communications method according to another embodiment of the present invention;
FIGs. 6A through 6F show examples of a practical screen output by the input/output unit;
FIG. 7 shows the sequence for explanation of the data communications method according to a further embodiment of the present invention;
FIGs. 8A through 8D show examples of a practical screen output by the input/output unit; and
FIG. 9 shows the configuration of the data communications system according to another embodiment of the present invention.

### Description of the Preferred Embodiments

The embodiments of the present invention are described below by referring to the attached drawings.

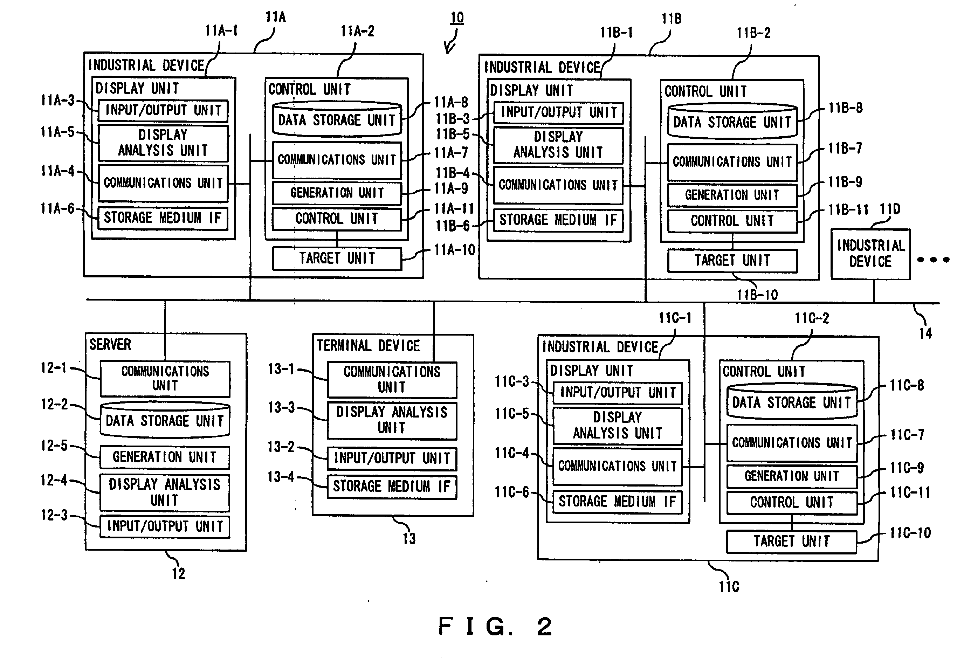

FIG. 2 shows the configuration of the data communications system according to an embodiment of the present invention.

As shown in FIG. 2, a data communications system 10 comprises a plurality of industrial devices 11 (11A (first industrial device), 11B (second industrial device), 11C (third industrial device), ...), a server 12 (second industrial device) for centrally managing a set value, etc. of each industrial device 11, and a terminal device 13 (first terminal device) for checking and changing a set value stored in each of the industrial device 11 and the server 12 each being connected through a network 14 such as a LAN, etc. The industrial device 11 of the present invention is described as a loom.

The above-mentioned industrial device 11A comprises a display unit 11A-1 having a flat panel, a touch panel, etc., and a control unit 11A-2 for controlling the operation of the target unit having the function of a producing process, etc. and for recording and managing a set value for control of the operation. The industrial device 11B and the industrial device 11C are similar in configuration and operation to the industrial device 11A. However, for easier explanation, the configuration of each device is assigned a different reference numeral. The display unit 11A-1 configures a Web browser facility, and the control unit 11A-2 configures a Web server facility.

The display unit 11A-1 provides a man-machine interface between the operator and the industrial device 11A, and configures a Web browser facility by comprising: an input/output unit 11A-3 having a flat panel, a touch panel, etc. of liquid crystal; a communications unit 11A-4 for communicating predetermined data such as set values stored in other industrial device 11, the server 12, etc. display data for display of a predetermined screen on the input/output unit 11A-3; a display analysis unit 11A-5 for analyzing the display data received by the communications unit 11A-4, and outputting the data to the input/output unit 11A-3; and a storage medium IF (interface) 11A-6 (reading unit) for reading data such as a set value stored in a storage medium (for example, a memory card, a flexible disk, etc.). The Web refers to a system capable of sharing data described in a standardized page description language such as an HTML (hyper text markup language), an XML (extensible markup language), etc. on a network. For example, it is assumed that predetermined data can be read to a Web browser using a CGI (common gateway interface), an HTTP (hypertext transfer protocol), etc. by specifying the URL (uniform resource locator) of the Web server and an IP (Internet protocol) address.

The control unit 11A-2 configures a Web server facility by comprising a communications unit 11A-7 for communicating predetermined data such as a set value, display data, etc. stored by other industrial devices 11, the server 12, a storage medium, etc.; a data storage unit 11A-8 for storing predetermined data received by the communications unit 11A-7; a generation unit 11A-9 for generating display data; and a control unit 11A-11 for controlling the operation of a target unit 11A-10 based on the set value stored in the data storage unit 11A-8.

The server 12 configures a Web browser facility and a Web server facility by comprising: a communications unit 12-1 for communicating predetermined data such as a set value, display data, etc. stored in each industrial device 11 and a storage medium, etc.; a data storage unit 12-2 for storing predetermined data received by the communications unit 12-1; an input/output unit 12-3 for providing a man-machine interface between an operator and the server 12 and having a flat panel, a touch panel, etc. of liquid crystal, etc.; a display analysis unit 12-4 for analyzing display data received from the communications unit 12-1 and outputting the data to the input/output unit 12-3; and a generation unit 12-5 for generating display data. The server 12 can also comprise a storage medium IF for reading data such as a set value, etc. stored in a storage medium. Furthermore, the input/output unit 12-3 can also comprise, for example, a display device, a keyboard, a mouse, etc.

The terminal device 13 configures a Web browser facility by comprising:
a communications unit 13-1 (a second transmission unit) for communicating predetermined data such as a set value, display data, etc. stored in each industrial device 11, the server 12, a storage medium, etc.; an input/output unit 13-2 for providing a man-machine interface between an operator and the terminal device 13, and having a flat panel, a touch panel, etc. of liquid crystal, etc.; a display analysis unit 13-3 for analyzing display data received by the communications unit 13-1, and outputting the data to the input/output unit 13-2; and a storage medium IF 13-4 for reading data such as a set value, etc. stored in a storage medium. The terminal device 13 can also comprise a data storage unit (for example, a built-in HD (hard disk), etc.) storing predetermined data received from the communications unit 13-1.

The present invention is featured in that peer-to-peer communications are realized by including a Web browser facility and a Web server facility in the industrial device 11 so that predetermined data can be communicated between the industrial devices 11 without the server 12.

For example, by an operator operating the input/output unit 11A-3 of the industrial device 11A, a data communications method used when predetermined data (a predetermined value, etc.) stored in a data storage unit 11B-8 of the industrial device 11B or a storage medium is stored in the data storage unit 12-2 of the server 12 is described below.

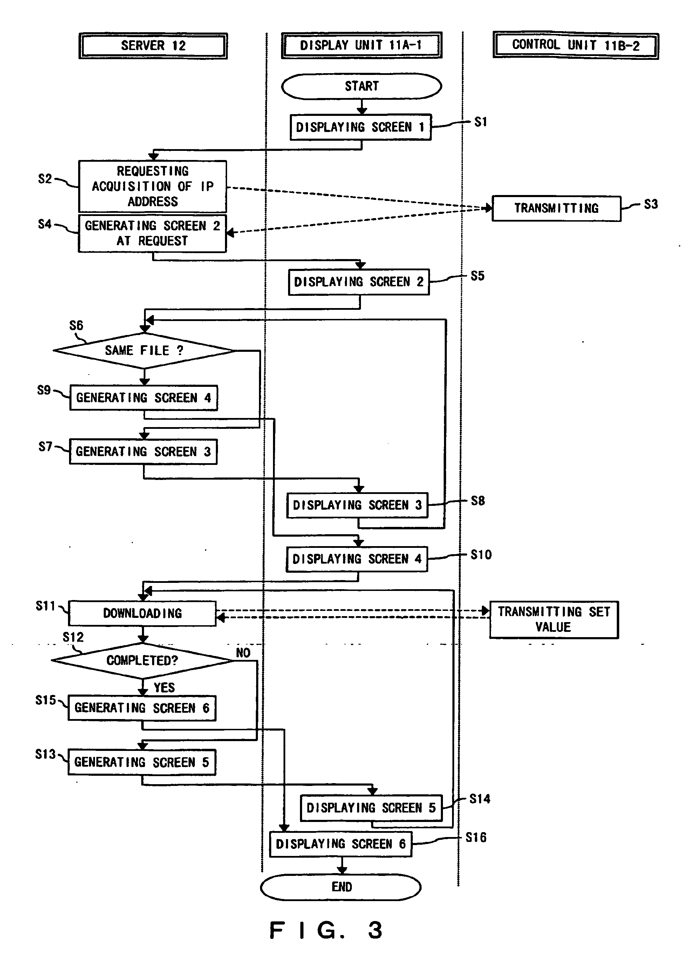

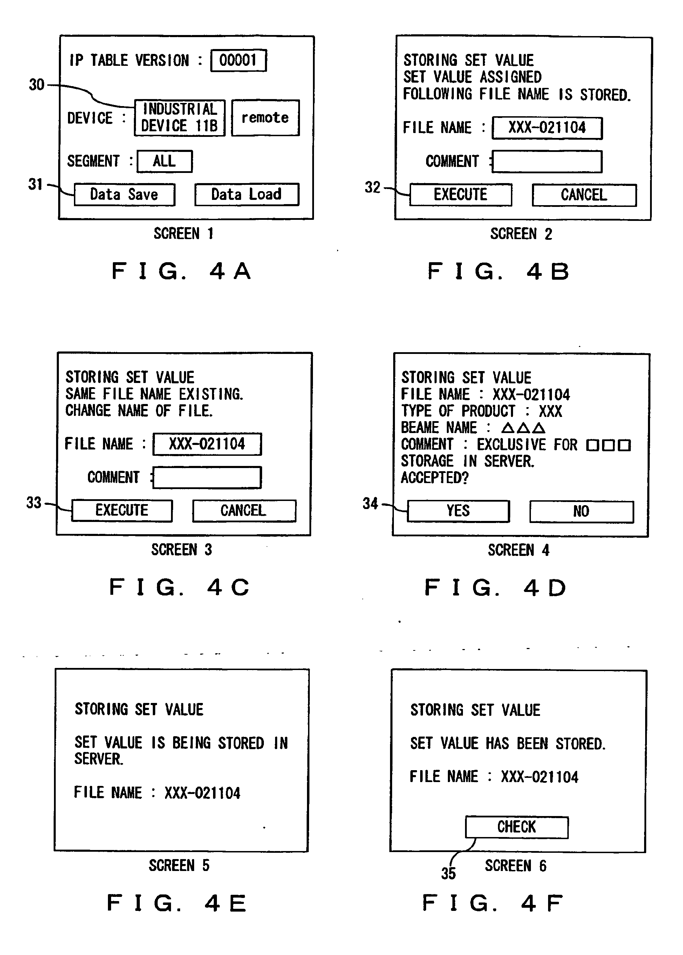

FIG. 3 shows a sequence for explanation of the data communications method. FIG. 4 shows an example of a practical screen output by the input/output unit 11A-3 or the input/output unit 12-3.

First, in step S1, the display unit 11A-1 of the industrial device 11A has the input/output unit 11A-3 display the screen 1 as shown in FIG. 4A. When the screen 1 is displayed, the operator inputs to an input frame 30 the name of the industrial device 11 of the predetermined data to be stored in the server 12, and presses a "Data Save" button 31. Then, the display unit 11A-1 transmits the input data indicating the industrial device 11 to the server 12.

Then, in step S2, the server 12 obtains an IP address based on the input data indicating the industrial device 11 from the data storage unit 12-2, and transmits the request data notifying that "the production data indicating the type of product being generated, the name of a used beam, etc. is transmitted to the server 12" to the industrial device 11 (industrial device 11B in this case) corresponding to the IP address.

In step S3, the industrial device 11B transmits the production data based on the received request data to the server 12.

Then, in step S4, the server 12 generates a screen 2 as shown in FIG. 4B based on the received production data, and transmits it to the display unit 11A-1 of the industrial device 11A.

In step S5, the display unit 11A-1 has the input/output unit 11A-3 display the screen 2. Then, the operator checks the file name (in the example shown in FIG. 4B, "xxx (type of product) - 021104 (year, month, day)", and presses an "Execute" button 32. Then, the display unit 11A-1 transmits the data indicating that the "Execute" button 32 has been pressed to the server 12.

Then, in step S6, when the server 12 checks the data indicating that the "Execute" button 32 has been pressed, it determines whether or not there are the same file names in the data storage unit 12-2.

If the same file names exist (YES in step S6), then the server 12 generates a screen 3 as shown in FIG. 4C, and transmits it to the display unit 11A-1 in step S7.

Then, in step S8, the display unit 11A-1 has the input/output unit 11A-3 display the screen 3. Then, the operator changes the file name, and presses an "Execute" button 33. The display unit 11A-1 transmits the data indicating that the "Execute" button 33 has been pressed to the server 12, and control is returned to step S6.

If there are no same file names (NO in step S6), the server 12 generates a screen 4 as shown in FIG. 4D, and transmits it to the display unit 11A-1 in step S9.

Then, in step S10, the display unit 11A-1 has the input/output unit 11A-3 display a screen 4. Then, the operator checks the contents (in the example shown in FIG. 4D, a file name: xxx-021104, the type of product: xxx, a beam name: Δ Δ Δ, comment: exclusive for □□□) of a set value, and presses a "YES" button 34. Then, the communications unit 11A-4 (first transmission unit) transmits the data (first request data) indicating that the "YES" button 34 has been pressed to the server 12.

Then, in step S11, when the server 12 receives from the communications unit 12-1 (reception unit or communications unit) the data indicating that the "YES" button 34 has been pressed, it downloads a set value from the data storage unit 11B-8 or a storage medium.

In step S12, the server 12 determines whether or not the value has been downloaded.

If the value has not been downloaded (NO in step S12), the server 12 generates a screen 5 as shown in FIG. 4E, and transmits it to the display unit 11A-1 in step S13. The screen 5 can be displayed on the input/output unit 12-3 of the server 12.

In step S14, the display unit 11A-1 has the input/output unit 11A-3 display the screen 5, and control is passed to step S11.

If the value has been downloaded (YES in step S12), then the server 12 generates a screen 6 as shown in FIG. 4F, and transmits it to the display unit 11A-1 in step S15.

Then, in step S16, the display unit 11A-1 has the input/output unit 11A-3 display the screen 6. The operator checks a set value stored by the server 12, and presses a "Check" button 35.

The steps S2 and S3 can be omitted. At this time, the file name and the screen 4 do not represent data indicating a set value, etc.

Thus, predetermined data stored in the industrial device 11B can be stored in the server 12 without reaching the server 12 or the industrial device 11B.

Then, for example, the data communications method used when predetermined data (a set value, etc.) stored in the data storage unit 12-2 of the server 12 is stored in the data storage unit 11B-8 of the industrial device 11B by the operator operating the input/output unit 11A-3 of the industrial device 11A is described below.

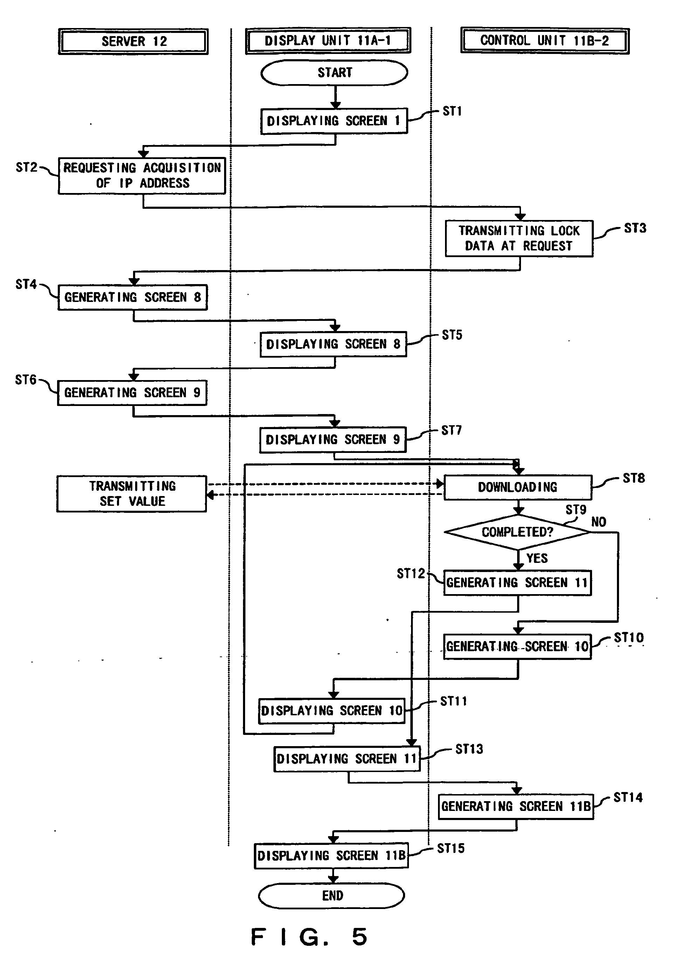

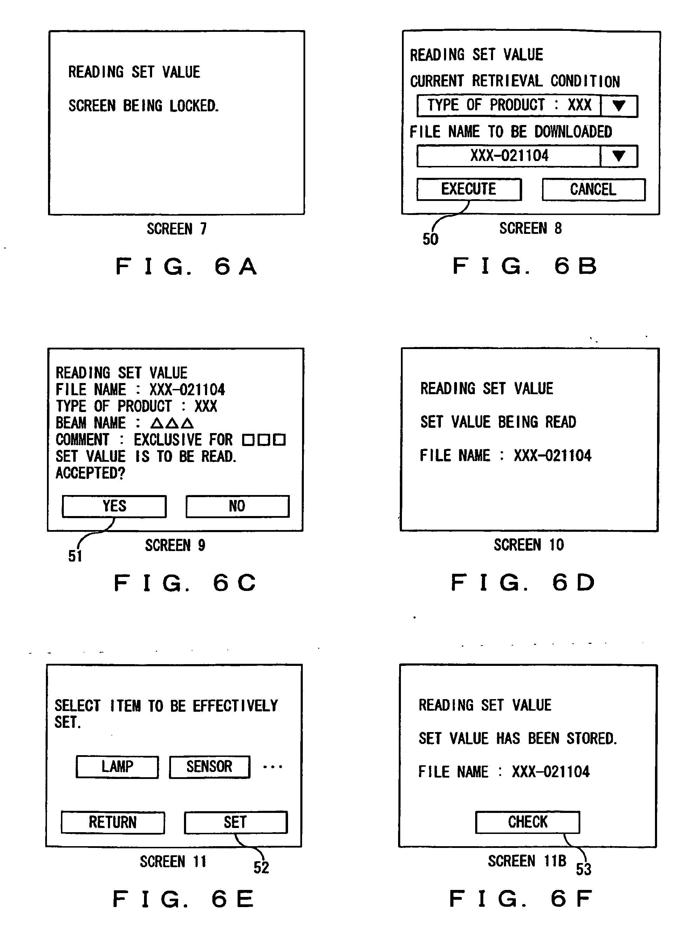

FIG. 5 shows the sequence for explanation of the data communications method. FIG. 6 shows an example of a practical screen output to the input/output unit 11A-3 or the input/output unit 12-3.

First, in step ST1, the display unit 11A-1 of the industrial device 11A has the input/output unit 11A-3 display the screen 1 as shown in FIG. 4A. When the screen 1 is displayed, the operator inputs to the input frame 30 the name of the industrial device 11 which is a probable storage device of predetermined data, and presses a "Data Load" button 31. Then, the display unit 11A-1 transmits the input data indicating the industrial device 11 to the server 12.

Then, in step ST2, the server 12 obtains from the data storage unit 12-2 the IP address based on the input data indicating the industrial device 11, and transmits the request data notifying that "the lock data indicating whether or not the screen is being locked is transmitted to the server 12" to the industrial device 11 (the industrial device 11B in this case) corresponding to the IP address.

Then, in step ST3, the industrial device 11B transmits the lock data based on the received request data to the server 12.

In step ST4, when the received lock data indicates a locked state, the server 12 generates a screen 7 as shown in FIG. 6A, and has the input/output unit 12-3 display it. On the other hand, when the received lock data does not indicate a locked state, the server 12 generates a screen 8 as shown in FIG. 6B, and transmits it to the display unit 11A-1.

Then, in step ST5, the display unit 11A-1 has the input/output unit 11A-3 display the screen 8. Then the operator specifies a retrieval condition and a file name (in the example shown in FIG. 6B, "type of product xxx" and "xxx-021104"), and presses an "Execute" button 50. Then, the display unit 11A-1 transmits the data indicating the retrieval condition and the file name, and the data indicating that the "Execute" button 50 has been pressed to the server 12.

Then, in step ST6, when the server 12 checks that the "Execute" button 50 has been pressed, it retrieves predetermined data from the data storage unit 12-2 based on the data indicating the retrieval condition and the file name, generates a screen 9 as shown in FIG. 6C, and transmits it to the display unit 11A-1.

Then, in step ST7, the display unit 11A-1 has the input/output unit 11A-3 display the screen 9. Then, the operator checks the contents (in the example shown in FIG. 6C, a file name: xxx-021104, type of product: xxx, a beam name: ΔΔΔ, a comment: exclusive for □□□) of the set value, and presses a "YES" button 51. Then, the communications unit 11A-4 (first transmission unit) of the display unit 11A-1 transmits the data (first request data) indicating that the "YES" button 51 has been pressed to a control unit 11B-2 of the industrial device 11B which is a probable storage device.

Then, in step ST8, when the control unit 11B-2 receives from a data communications unit 11B-7 (a reception unit or a communications unit) the data indicating that the "YES" button 51 has been pressed, it downloads predetermined data from the data storage unit 12-2 based on the data.

In step ST9, the control unit 11B-2 determines whether or not the data has been downloaded.

If the data has not been downloaded (NO in step ST9), the control unit 11B-2 generates a screen 10 as shown in FIG. 6D, and transmits it to the display unit 11A-1 in step ST10. The screen 10 can be displayed on the input/output unit 12-3 of the server 12.

Then, in step ST11, the display unit 11A-1 has the input/output unit 11A-3 display the screen 10, and control is returned to step ST8.

On the other hand, when the data has been downloaded (YES in step ST9), the control unit 11B-2 generates a screen 11 as shown in FIG. 6E, and transmits it to the display unit 11A-1 in step ST12.

Then, in step ST13, the display unit 11A-1 has the input/output unit 11A-3 display the screen 11. The operator selects an item to be effectively set, and presses a "Set" button 52, and transmits the effective item to the control unit 11B-2.

In step ST14, the control unit 11B-2 stores only a selected item in the data storage unit 11B-8. After the storage, it generates a screen 11B as shown in FIG. 6F, and transmits it to the display unit 11A-1.

Then, in step ST15, the display unit 11A-1 has the input/output unit 11A-3 display the screen 11B. Then, the operator checks the completion of the reading process, and presses a "Check" button 53.

The processes in steps ST2 and ST3 can be omitted.

Thus, predetermined data stored in the server 12 can be stored in the industrial device 11B without reaching the server 12 or the industrial device 11B.

Described below is the data communications method used when predetermined data (a set value, etc.) stored in the data storage unit 11B-8 of the industrial device 11B or a storage medium is stored in a data storage unit 11C-8 of the industrial device 11C by the operator operating the input/output unit 11A-3 of the industrial device 11A.

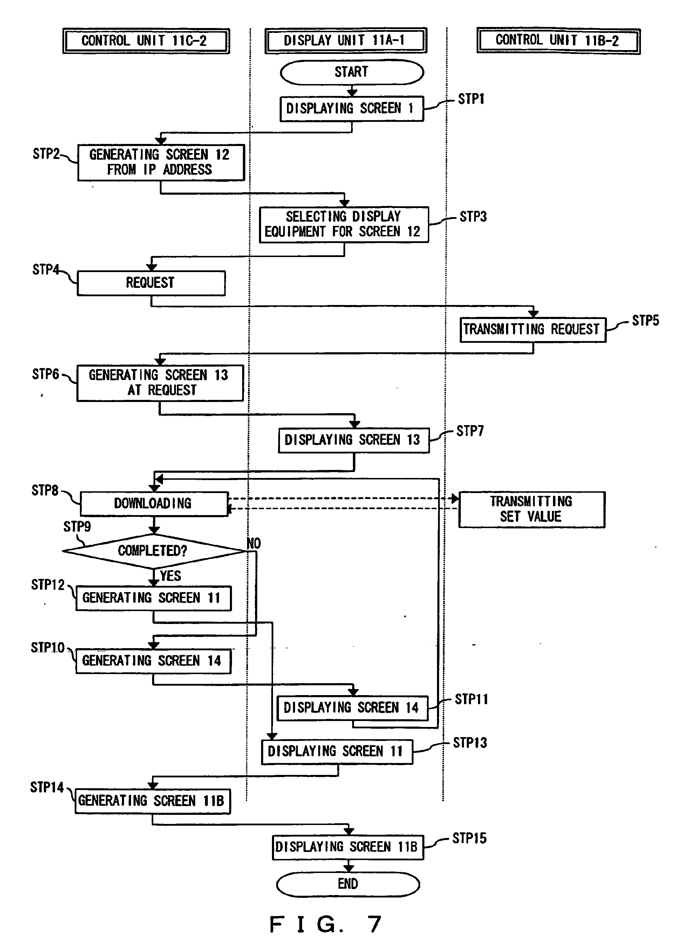

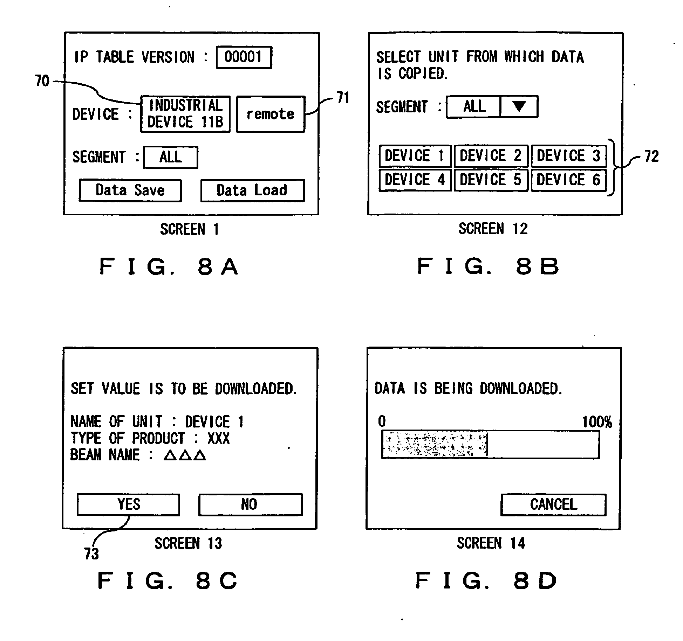

FIG. 7 shows the sequence for explanation of the data communications method. FIG. 8 shows an example of a practical screen output to the input/output unit 11A-3 or an input/output unit 11B-3.

First, in step STP1, the display unit 11A-1 of the industrial device 11A has the input/output unit 11A-3 display the screen 1 as shown in FIG. 8A. When the screen 1 is displayed, the operator inputs to an input frame 70 the name of the industrial device 11C which is a probable storage device, and presses a "Remote" button 71. Then, the display unit 11A-1 transmits to the selected industrial device 11C the data indicating that it has been selected as a storage device.

Then, in step STP2, a control unit 11C-2 of the industrial device 11C receives data indicating that it has been selected as a storage device, obtains the IP addresses of a (plurality of) probable devices from which data is to be copied from the data storage unit 11C-8, generates a screen 12 as shown in FIG. 8B based on the device names (devices 1 through 6 in this case) corresponding to the IP addresses, and transmits it to the display unit 11A-1 of the industrial device 11A.

Then, in step STP3, the display unit 11A-1 has the input/output unit 11A-3 display the screen 12. The operator selects the industrial device 11B (devices 1 through 6 in the example shown in FIG. 8B) which is a probable storage device from the names of the plurality of industrial devices 11, and presses a button 72. Then, the display unit 11A-1 transmits to the control unit 11C-2 the data indicating that the button 72 has been pressed.

Then, in step STP4, when the control unit 11C-2 checks that the button 72 has been pressed, it transmits the request data notifying that "the production data indicating the type of product being generated and the beam name is transmitted" to the data storage unit 11B-8.

Then, in step STP5, the control unit 11B-2 transmits to the control unit 11C-2 the production data based on the received request data.

Then, in step STP6, the control unit 11C-2 generates a screen 13 as shown in FIG. 8C based on the received production data, and transmits it to the display unit 11A-1 of the industrial device 11A.

Then, in step STP7, the display unit 11A-1 has the input/output unit 11A-3 display the screen 13. The operator checks the contents (in the example shown in FIG. 8C, the name of machine: device 1, type of product: xxx, beam name: Δ Δ Δ) of the set value, and presses the "YES" button 73. Then, the communications unit 11A-4 (first transmission unit) of the display unit 11A-1 transmits the data (first request data) indicating that a "YES" button 73 has been pressed to the control unit 11C-2.

Then, in step STP8, when the control unit 11C-2 receives from a data communications unit 11C-7 (a reception unit or a communications unit) the data indicating that the "YES" button 74 has been pressed, it downloads a set value from the data storage unit 11C-2 or a storage medium.

In step STP9, the control unit 11C-2 determines whether or not the data has been downloaded.

If the set value has not been downloaded (NO in step STP9), the control unit 11C-2 generates a screen 14 as shown in FIG. 8D, and transmits it to the display unit 11A-1 in step STP10. The screen 14 can be displayed on the input/output unit 11C-3.

Then, in step STP11, the display unit 11A-1 has the input/output unit 11A-3 display the screen 14, and control is returned to step STP8.

On the other hand, when the data has been downloaded (YES in step STP9), the control unit 11C-2 generates a screen 11 as shown in FIG. 6E, and transmits it to the display unit 11A-1 in step STP12.

Then, in step STP13, the display unit 11A-1 has the input/output unit 11A-3 display the screen 11. The operator selects an item to be effectively set, and presses a "Set" button 52, and transmits the effective item to the control unit 11C-2.

In step STP14, the control unit 11C-2 stores only a selected item in the data storage unit 11C-8. After the storage, it generates a screen 11B as shown in FIG. 6F, and transmits it to the display unit 11A-1.

Then, in step STP15, the display unit 11A-1 has the input/output unit 11A-3 display the screen 11B. Then, the operator checks the completion of the reading process, and presses a "Check" button 53.

Thus, data can be communicated between the industrial device 11B and the industrial device 11C without the server 12. Thus, for example, although the server 12 is faulty, predetermined data can be stored in another industrial device 11 or terminal device 13, and the predetermined data can be stored in the server 12 when the server 12 is recovered from the fault.

Described below is the data communications system according to another embodiment of the present invention.

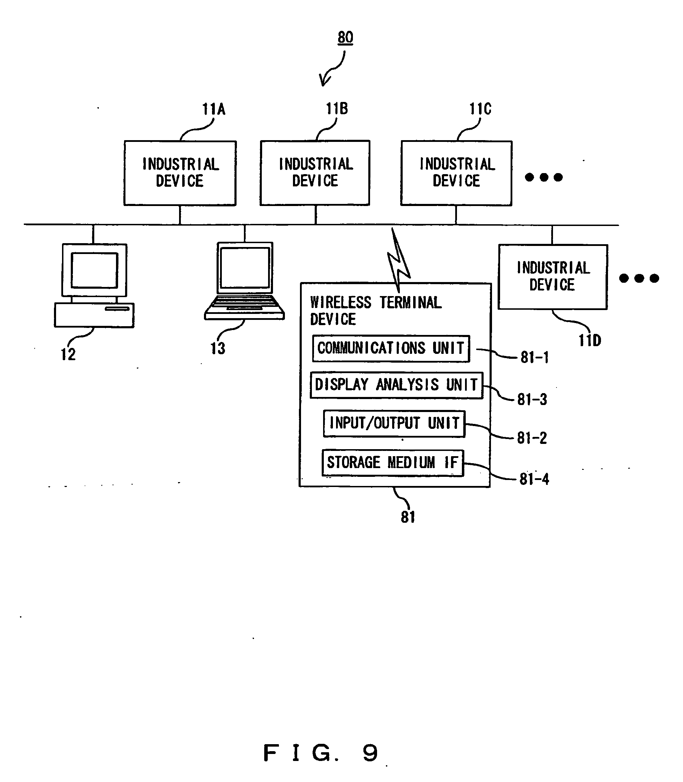

FIG. 9 shows the configuration of the data communications system according to another embodiment of the present invention.

As shown in FIG. 9, a data communications system 80 comprises a wireless terminal device 81 (second terminal device) in addition to the industrial device 11, the server 12, and the terminal device 13.

The wireless terminal device 81 configures a Web browser facility by comprising:
a communications unit 81-1 (a third transmission unit) for communicating predetermined data such as a set value, display data, etc. stored in each industrial device 11, the server 12, the terminal device 13, a storage medium, etc. through a wireless LAN; an input/output unit 81-2 for providing a man-machine interface between an operator and the wireless terminal device 81, and having a flat panel, a touch panel, etc. of liquid crystal, etc.; a display analysis unit 81-3 for analyzing display data received by the communications unit 81-1, and outputting the data to the input/output unit 81-2; and a storage medium IF 81-4 for reading data such as a set value, etc. stored in a storage medium (for example, a flexible disk, a memory card, etc.). The wireless terminal device 81 can also comprise a data storage unit (for example, a built-in HD, etc.) storing predetermined data received from the communications unit 81-1. The communications unit 81-1 is connected through the network 14 using, for example, radio, infrared, Bluetooth, a mobile phone, or a PHS (personal handy-phone system), etc.

Furthermore, the industrial device 11, the server 12, the terminal device 13, and the wireless terminal device 81 can also be configured such that they can access a Web server of a public line represented by the Internet through the network 14.

Thus, data communications between any two industrial devices can be performed based on the request data transmitted from an industrial device different from the two industrial devices. Thus, although an industrial device which requests to communicate data is remote from the location of an operator, the data communications can be performed by an industrial device near the operator.

Thus, the operability of data communications between any industrial devices can be improved.

Furthermore, since the industrial device 11, the server 12, and the terminal device 13 can be realized using a general-purpose computer such as a personal computer, the compatibility among the devices in the data communications system 10 can be improved.

Additionally, the data operation in the data communications can be efficiently performed by a mobile system by connecting the terminal device 13 to the network 14 through a wireless LAN.

Although the server 12 is faulty, the industrial device 11 and the terminal device 13 can store the set value of another industrial device 11. Therefore, maintenance can be conducted more easily, and a countermeasure can be quickly taken when any trouble occurs in a system.

Furthermore, data communications can be performed for a set value between industrial devices 11 without providing the server 12. Therefore, a low-cost data communications system 10 Therefore, a low-cost data communications system 10 can be realized. Thus, the data communications system 10 can be easily realized in a small factory provided with a small number of industrial devices 11.

The industrial device 11 is applicable to a fiber machine such as a loom, a spinning frame, a bobbin and fly frame, etc. In a weaving factory, a number of, for example, 50 or 100 looms are mounted and operated. In such a factory, for example, there can be the case in which data has to be communicated between the first loom and the 100th loom which are remote from each other. In the factory, since one operator is in charge of tens of looms, and the operator is not necessarily close to the target looms. However, in the fabric factory to which the present invention is applied, an operator can use a loom near the operator to have the data communicated between other optional looms, thereby facilitating the control of the factory. This holds true also in a spinning factory having a spinning frame, a bobbin and fly frame, and other fiber machines.

As described above, according to the present invention, data can be communicated between any two industrial devices 11 based on the request data transmitted from an industrial device 11 different from the two industrial devices 11. Therefore, although the industrial device 11 which is to communicate data is remote from an operator, for example, can use the industrial device 11 close to the operator to operate the data communications. As a result, the operability of the data communications between the two arbitrary industrial devices 11 can be improved.

## Claims

1. A data communications system, which communicates data through a peer to peer network (14) among first through third industrial devices (11A through 11C), wherein:
each of the industrial devices (11A through 11C) comprises a communications unit (11A-7, 11B-7, 11C-7) for communicating predetermined data including a set value and display data stored by other industrial devices;
the first industrial device (11A) comprises a first transmission unit (11A-4) for transmitting to the second industrial device (11C) first request data requesting predetermined data to be downloaded at an input request;
the second industrial device (11C) comprises: a reception unit (11C-7) for receiving the first request data and a communications unit (11C-7) for communicating the predetermined data with the third industrial device (11B) through the network (14); and
the third industrial device (11B) is adapted to transmit the set value based on the first request data to the second industrial device (11C), wherein
the first through the third industrial devices (11A through 11C) are adapted to control the operation of a loom according to the predetermined data.

2. The system according to claim 1, wherein:
the second industrial device (11C) in the data communications system can be a server (12) for centrally managing the predetermined data of the first and third industrial devices (11A and 11C);
the first transmission unit (11A-4) can transmit the first request data to the server (12); and
the communications unit (12-1) can communicate the predetermined data with the first or third industrial device (11A or 11C) through the network (14) according to the first request data.

3. The system according to claim 1 or 2, comprising
a first terminal device (13) having a second transmission unit (13-1) for transmitting input second request data to the second industrial device (11C) through the network (14), wherein
the communications unit (11C-7) can communicate the predetermined data according to the second request data.

4. The system according to any of claims 1 trough 3, comprising
a second terminal device (81) having a third transmission unit (81-1) for transmitting third request data at an input request to the second industrial device (11C) through a wireless LAN, wherein
the communications unit (11C-7) can communicate the predetermined data with the first industrial device (11A), the third industrial device (11B), or the first terminal device (13) through the network (14) at the third request data.

5. The system according to any of claims 1 through 4, wherein
the first through third industrial devices (11A through 11C), the first terminal device (13), and the second terminal device (81) comprise a read unit (11A-6, 11B-6, 11C-6, 13-4, and 81-4) for reading contents of a storage medium for storing the predetermined data; and the communications unit (11B-7) can communicate the predetermined data stored in the storage medium.

6. A data communications method for communicating data among first through third industrial devices (11A through 11C) which operates according to predetermined data through a peer to peer network (14), comprising:
predetermined data including a set value and display data stored by an industrial device so communicated by each industrial device,
transmitting first request data requesting predetermined data to be downloaded based on an input request from the first industrial device (11A) to the second industrial device (11C),
receiving the first request data by the second industrial device (11C);
communicating between the second industrial device (11C) and the third industrial device (11B) the predetermined data through the network (14) based on the first request data,
transmitting the set value based on the first request data by the third industrial device (11B) to the second industrial device (11C), wherein
the operation of a loom is controlled by the first through the third industrial devices (11A through 11C) according to the predetermined data.

## Patentansprüche

1. Ein Datenkommunikationssystem, das Daten durch ein Peer-zu-Peer-Netz (14) unter ersten bis dritten industriellen Einrichtungen (11A bis 11C) kommuniziert, wobei:
jede der industriellen Einrichtungen (11A bis 11C) eine Kommunikationseinheit (11A-7, 11B-7, 11C-7) umfasst zum Kommunizieren vorbestimmter Daten, die einen eingestellten Wert und Anzeigedaten enthalten, die durch andere industriellen Einrichtungen gespeichert werden;
die erste industrielle Einrichtung (11A) eine erste Übertragungseinheit (11A-4) umfasst zum Übertragen zu der zweiten industriellen Einrichtung (11C) von ersten Anforderungsdaten, die vorbestimmte Daten anfordern, die herunterzuladen sind in einer Eingabeanforderung;
die zweite industrielle Einrichtung (11C) umfasst: eine Empfangseinheit (11C-7) zum Empfangen der ersten Anforderungsdaten und eine Kommunikationseinheit (11C-7) zum Kommunizieren der vorbestimmten Daten mit der dritten industriellen Einrichtung (11B) durch das Netz (14); und
die dritte industrielle Einrichtung (11B) angepasst ist, den eingestellten Wert basierend auf den ersten Anforderungsdaten zu der zweiten industriellen Einrichtung (11C) zu übertragen, wobei
die ersten bis dritten industriellen Einrichtungen (11A bis 11C) angepasst sind, die Operation eines Webstuhls gemäß den vorbestimmten Daten zu steuern.

2. Das System nach Anspruch 1, wobei:
die zweite industrielle Einrichtung (11C) in dem Datenkommunikationssystem ein Server (12) zum zentralen Managen der vorbestimmten Daten der ersten und dritten industriellen Einrichtungen (11A und 11C) sein kann;
die erste Übertragungseinheit (11A-4) die ersten Anforderungsdaten zu dem Server (12) übertragen kann; und
die Kommunikationseinheit (12-1) die vorbestimmten Daten mit der ersten oder dritten industriellen Einrichtung (11A oder 11C) durch das Netz (14) gemäß den ersten Anforderungsdaten kommunizieren kann.

3. Das System nach Anspruch 1 oder 2, umfassend
eine erste Endgeräteinrichtung (13) mit einer zweiten Übertragungseinheit (13-1) zum Übertragen eingegebener zweiter Anforderungsdaten zu der zweiten industriellen Einrichtung (11C) durch das Netz (14), wobei
die Kommunikationseinheit (11C-7) die vorbestimmten Daten gemäß den zweiten Anforderungsdaten kommunizieren kann.

4. Das System nach beliebigen von Ansprüchen 1 bis 3, umfassend
eine zweite Endgeräteinrichtung (81) mit einer dritten Übertragungseinheit (81-1) zum Übertragen dritter Anforderungsdaten in einer Eingabeanforderung zu der zweiten industriellen Einrichtung (11C) durch ein drahtloses LAN, wobei
die Kommunikationseinheit (11C-7) die vorbestimmten Daten mit der ersten industriellen Einrichtung (11A), der dritten industriellen Einrichtung (11B) oder der ersten Endgeräteinrichtung (13) durch das Netz (14) in den dritten Anforderungsdaten kommunizieren kann.

5. Das System nach beliebigen von Ansprüchen 1 bis 4, wobei
die ersten bis dritten industriellen Einrichtungen (11A bis 11C), die erste Endgeräteinrichtung (13) und die zweite Endgeräteinrichtung (81) eine Leseeinheit (11A-6, 11B-6, 11C-6, 13-4 und 81-4) zum Lesen von Inhalt eines Speichermediums zum Speichern der vorbestimmten Daten umfassen; und
die Kommunikationseinheit (11B-7) die vorbestimmten Daten, die in dem Speichermedium gespeichert sind, kommunizieren kann.

6. Ein Datenkommunikationsverfahren zum Kommunizieren von Daten unter ersten bis dritten industriellen Einrichtungen (11A bis 11C), welches gemäß vorbestimmten Daten durch ein Peer-zu-Peer-Netz (14) arbeitet, umfassend:
vorbestimmte Daten, die einen eingestellten Wert und Anzeigedaten enthalten, die durch eine industrielle Einrichtung gespeichert werden, durch jede industrielle Einrichtung kommuniziert werden,
Übertragen erster Anforderungsdaten, die vorbestimmte Daten anfordern, die herunterzuladen sind basierend auf einer Eingabeanforderung von der ersten industriellen Einrichtung (11A) zu der zweiten industriellen Einrichtung (11C),
Empfangen der ersten Anforderungsdaten durch die zweite industrielle Einrichtung (11C);
Kommunizieren zwischen der zweiten industriellen Einrichtung (11C) und der dritten industriellen Einrichtung (11B) der vorbestimmten Daten durch das Netz (14) basierend auf den ersten Anforderungsdaten,
Übertragen des eingestellten Wertes basierend auf den ersten Anforderungsdaten durch die dritte industrielle Einrichtung (11B) zu der zweiten industriellen Einrichtung (11C), wobei
die Operation eines Webstuhls durch die ersten bis dritten industriellen Einrichtungen (11A bis 11C) gemäß den vorbestimmten Daten gesteuert wird.

## Revendications

1. Système de communication de données, qui communique des données via un réseau de poste à poste (14) au sein de premier à troisième dispositifs industriels (11A à 11C), dans lequel
chacun des dispositifs industriels (11A à 11C) comprend une unité de communications (11A-7, 11B-7, 11C-7) pour communiquer des données prédéterminées englobant une valeur de consigne et des données d'affichage mémorisées par d'autres dispositifs industriels ;
le premier dispositif industriel (11A) comprend une première unité de transmission (11A-4) pour transmettre au deuxième dispositif industriel (11C) des premières données de demande d'informations réclamant des données prédéterminées à charger à une demande d'entrée ;
le deuxième dispositif industriel (11C) comprend : une unité de réception (11C-7) pour recevoir les premières données de demande d'informations, et une unité de communications (11C-7) pour communiquer les données prédéterminées au troisième dispositif industriel (11B) via le réseau (14) ; et
le troisième dispositif industriel (11B) est conçu pour transmettre la valeur de consigne, en se basant sur les premières données de demande d'informations, au deuxième dispositif industriel (11C);
les premier à troisième dispositifs industriels (11A à 11C) étant conçus pour commander le fonctionnement d'un métier à tisser en fonction des données prédéterminées.

2. Système selon la revendication 1, dans lequel :
le deuxième dispositif industriel (11C) dans le système de communication de données peut être un serveur (12) pour la gestion centrale des données prédéterminées des premier et troisième dispositifs industriels (11A et 11C) ;
la première unité de transmission (11A-4) peut transmettre les premières données de demande d'informations au serveur (12) ; et
l'unité de communications (12-1) peut communiquer les données prédéterminées au premier ou au troisième dispositif industriel (11A ou 11C) via le réseau (14), en fonction des premières données de demande d'informations.

3. Système selon la revendication 1 ou 2, comprenant
un premier dispositif (13) faisant office de terminal possédant une deuxième unité de transmission (13-1) pour transmettre des données de deuxième demande d'entrée au deuxième dispositif industriel (11C) via le réseau (14),
l'unité de communications (11C-7) étant à même de communiquer les données prédéterminées en fonction des deuxièmes données de demande d'informations.

4. Système selon l'une quelconque des revendications 1 à 3, comprenant
un deuxième dispositif (81) faisant office de terminal possédant une troisième unité de transmission (81-1) pour transmettre des troisièmes données dé demande d'informations à une demande d'entrée au deuxième dispositif industriel (11C) via un réseau LAN sans fil ;
l'unité de communications (11C-7) étant à même de communiquer les données prédéterminées au premier dispositif industriel (11A), au troisième dispositif industriel (11B) ou au premier dispositif (13) faisant office de terminal via le réseau (14) aux troisièmes données de demande d'informations.

5. Système selon l'une quelconque des revendications 1 à 4, dans lequel
les premier à troisième dispositifs industriels (11A à 11C), le premier dispositif (13) faisant office de terminal et le deuxième dispositif (81) faisant office de terminal, comprennent une unité de lecture (11A-6, 11B-6, 11C-6, 13-4 et 81-4) pour lire le contenu d'un support de mémoire pour la mémorisation des données prédéterminées ; et l'unité de communications (11B-7) est à même de communiquer les données prédéterminées mémorisées dans le support de mémoire.

6. Procédé de communication de données pour communiquer des données au sein de premier à troisième dispositifs industriels (11A à 11C), qui travaille conformément à des données prédéterminées via un réseau de poste à poste (14), comprenant le fait de :
communiquer des données prédéterminées englobant une valeur de consigne et des données d'affichage mémorisées par un dispositif industriel, via chaque dispositif industriel ;
transmettre des premières données de demande d'informations réclamant des données prédéterminées à charger en se basant sur une demande d'entrée émise par le premier dispositif industriel (11A), au deuxième dispositif industriel (11C) ;
recevoir les premières données de demande d'informations, via le deuxième dispositif industriel (11C) ;
communiquer entre le deuxième dispositif industriel (11C) et le troisième dispositif industriel (11B) les données prédéterminées via le réseau (14) en se basant sur les premières données de demande d'informations ;
transmettre la valeur de consigne en se basant sur les premières données de demande d'informations via le troisième dispositif industriel (11B) au deuxième dispositif industriel (11C) ;
le fonctionnement d'un métier à tisser étant commandé par les premier à troisième dispositifs industriels (11A à 11C) en fonction des données prédéterminées.
